# EUROPÄISCHE PATENTANMELDUNG

(11) **EP 4 681 952 A1**
(43) Veröffentlichungstag der Anmeldung: **21.01.2026**
(21) Anmeldenummer: 25178913.7
(22) Anmeldetag: 27.05.2025
(51) Int. Cl.: B60K 17/04, F16H 37/08, F16H 57/031, F16H 57/04, H02K 9/19, B60K 1/00, F16H 57/02

(54) **ELEKTRISCHE ANTRIEBSVORRICHTUNG FÜR EIN FAHRZEUG**

(30) Priorität: 15.07.2024 DE 102024206635
(71) Anmelder: Robert Bosch GmbH, 70442 Stuttgart (DE)
(72) Erfinder: Bak, Dabrowka, 71706 Markgroeningen (DE)

(57) **Zusammenfassung**

Die Erfindung betrifft eine Antriebsvorrichtung für ein Fahrzeug mit einem Gehäuse (10), in dem ein ölgeschmiertes Getriebe (11) aufgenommen ist, wobei sich im Inneren (10i) des Gehäuses (10) ein Öl (14) zumindest zur Schmierung des Getriebes (11) befindet. Das Gehäuse (10) weist weder eine Öleinlassöffnung noch eine Ölauslassöffnung auf.

Die Erfindung betrifft auch ein Verfahren zur Herstellung und ein Verfahren zur Demontage einer Antriebsvorrichtung (1) für ein Fahrzeug mit einem Gehäuse (10), in dem ein ölgeschmiertes Getriebe (11) aufgenommen ist, wobei sich im Inneren (10i) des Gehäuses (10) ein Öl (14) zumindest zur Schmierung des Getriebes (11) befindet. Diese Verfahren sehen vor, dass das Öl (14) schon während der Herstellung in das Gehäuse (10) eingefüllt wird bzw. erst während der Demontage aus dem Gehäuse (10) ausgeleert wird.

## Beschreibung

### Stand der Technik

Aus der DE 10 2020 104 186 A1 ist eine Antriebsvorrichtung bekannt, welche bewirkt, dass sich eine Radachse eines Fahrzeugs dreht, wobei die Antriebsvorrichtung aufweist: einen Motor, ein mit dem Motor verbundenes Untersetzungsgetriebe, ein Differential, welches mit dem Untersetzungsgetriebe verbunden ist und welches so eingerichtet ist, dass es die Radachse um eine Differentialachse dreht, ein Gehäuse, welches einen Getriebegehäuseabschnitt aufweist, der so angeordnet ist, dass er in einem Inneren davon das Untersetzungsgetriebe und das Differential beherbergt, und ein im Inneren des Getriebegehäuseabschnitts untergebrachtes Öl. Das Differential weist ein Zahnrad auf, welches derart angeordnet ist, dass es sich um die Differentialachse dreht. Ein Endabschnitt des Zahnrads auf einer unteren Seite in einer Vertikalrichtung ist tiefer als das Untersetzungsgetriebe in der Vertikalrichtung angeordnet und ist so angeordnet, dass er in das Öl im Inneren des Getriebegehäuseabschnitts eintaucht.

Aus der DE 10 2020 104 186 A1 ist dabei weiter bekannt, dass das Gehäuse ein Ölabführloch und ein Ölzuführloch aufweist, von denen jedes so angeordnet ist, dass es ein Inneres des Gehäuses und einen außerhalb des Gehäuses liegenden Raum miteinander verbindet, und ein erstes Verschlusselement aufweist, welches lösbar in das Ölabführloch eingesetzt ist, um das Ölabführloch zu verschließen, und ein zweites Verschlusselement aufweist, welches lösbar in das Ölzuführloch eingesetzt ist, um das Ölzuführloch zu verschließen. Jedes von dem Ölabführloch und dem Ölzuführloch ist in einem Abschnitt des Getriebegehäuseabschnitts, welcher das Differential beherbergt, definiert.

Die DE 10 2020 104 186 A1 offenbart auch ein zugehöriges Ölwechselverfahren, dass unter anderem vorsieht, das Öl durch das Ölabführloch zu entfernen und ein anderes Öl durch das Ölzuführloch einzufüllen.

### Offenbarung der Erfindung

Die vorliegende Erfindung geht von der Beobachtung der Erfinderin aus, dass elektrische Antriebsvorrichtungen zum Antrieb von Fahrzeugen, beispielsweise von Personen- oder Lastkraftwagen, und Öle zur Schmierung dieser Antriebsvorrichtungen derart auslegbar sind, dass während der Lebensdauer dieser Antriebsvorrichtungen ein Ölwechsel gar nicht oder nur in sehr langen Intervallen erforderlich ist.

Die Erfindung sieht aus diesem Grund zur Vereinfachung der Antriebsvorrichtung vor, dass das Gehäuse der Antriebsvorrichtung weder eine Öleinlassöffnung noch eine Ölauslassöffnung aufweist.

Da es im Stadium der Herstellung der Antriebsvorrichtung verschiedene Möglichkeiten gibt, Öl in das Innere des Gehäuses der sich in Herstellung befindlichen Antriebsvorrichtung zu bringen, kann nämlich im Rahmen der Erfindung auf eine Möglichkeit, Öl in das Gehäuse der fertiggestellten Antriebsvorrichtung zu bringen, ohne Weiteres verzichtet werden.

Die Erfindung betrifft daher eine Antriebsvorrichtung für ein Fahrzeug mit einem Gehäuse, in dem ein ölgeschmiertes Getriebe aufgenommen ist, wobei sich im Inneren des Gehäuses ein Öl zumindest zur Schmierung des Getriebes befindet, wobei das Gehäuse weder eine Öleinlassöffnung noch eine Ölauslassöffnung aufweist.

Die Antriebsvorrichtung kann beispielsweise eine in einem Gehäuse integrierte Einheit mit einer elektrischen Maschine, einem mit der elektrischen Maschine mechanisch gekoppelten ölgeschmierten Getriebe und ggf. einem mit der elektrischen Maschine elektrisch verbundenen Wechselrichter sein. Derartige Einheiten werden auch als E-Achsen bezeichnet und dienen dem elektrischen Antrieb von Fahrzeugen, beispielsweise von Personenkraftwagen und Lastkraftwagen.

Bei dem Öl kann es sich um eine gewisse Quantität von Öl handeln, beispielsweise um eine Quantität von wenigstens einem Liter oder im Bereich eines oder einiger Liter, beispielsweise 1 - 25 Liter.

Bei dem Öl kann es sich auch um eine Quantität von Öl handeln, die über die Ölmenge hinausgeht, die durch Anhaftung an Oberflächen des Getriebes und ggf. an weiteren Subkomponenten der Antriebseinrichtung aufnehmbar ist, sodass sich zumindest eine Teilmenge des Öls - z.B. der Schwerkraft folgend - in einem Ölsumpf des Gehäuses bzw. der Antriebseinheit sammelt und dort ein Flüssigkeitsreservoir bildet, das beispielsweise eine Mindesttiefe von einem Zentimeter oder von einigen, z.B. von 3 Zentimetern, aufweist.

Öleinlassöffnungen und Ölauslassöffnungen im Sinne der Erfindung sind insbesondere Öffnungen im Gehäuse der Antriebseinrichtung, die, obwohl ggf. durch passende Elemente der Antriebsöffnung verschließbar und öffenbar, keine andere Funktionalität bereitstellen, als einen Zugang aus der Umgebung des Gehäuses zum Inneren des Gehäuses zu ermöglichen, durch den Öl in das Gehäuse hinein oder aus dem Gehäuse heraus gebracht werden kann.

Der Bedeutungsgehalt der Begriffe "Öleinlassöffnung" und "Ölauslassöffnung" stimmt also im Sinne der Erfindung mit dem überein, was der Fachmann für mechanische Getriebe für Antriebsvorrichtungen für Fahrzeuge, z.B. Personenkraftwagen und Lastkraftwagen, unter einer Öleinlassöffnung bzw. einer Ölauslassöffnung versteht, ohne theoretisierend darüber hinauszugehen.

Insbesondere keine Öleinlassöffnungen und Ölauslassöffnungen eines Gehäuses einer Antriebsvorrichtung im Sinne der Erfindung sind daher die folgenden an dem Gehäuse der elektrischen Antriebsvorrichtung gegebenenfalls auftretenden Gestaltungen, durch die lediglich während der Herstellung der Antriebsvorrichtung, nicht aber an der fertiggestellten Antriebsvorrichtung, Öl in das Gehäuse bzw. in das sich in der Herstellung befindliche Gehäuse einfüllbar ist:
- Eine Öffnung eines Gehäuseteils von zwei Gehäuseteilen des Gehäuses, von denen eines beispielsweise als Gehäusedeckel ausgebildet ist, wobei die beiden Gehäuseteile miteinander lösbar oder unlösbar verbunden sind, sodass das Gehäuse nach außen abgeschlossen ist, und dass das Gehäuse gerade durch die Herstellung der Verbindung nach außen abgeschlossen wird, indem die Verbindung eine zuvor bestehende Öffnung zumindest eines der beiden Gehäuseteile oder eine Öffnung zwischen den beiden Gehäuseteilen verschließt.
- Eine Durchgangsbohrung durch zwei Gehäuseteile des Gehäuses, von denen eines beispielsweise als Gehäusedeckel ausgebildet ist, wobei die beiden Gehäuseteile miteinander lösbar oder unlösbar verbunden sind, sodass das Gehäuse nach außen abgeschlossen ist, wobei die beiden Gehäuseteile durch ein Verbindungsmittel, beispielsweise eine Schraube, verbunden sind, welches die beiden Gehäuseteile miteinander verbindet, indem es die Durchgangsbohrung verschließt.
- Eine Durchführung des Gehäuses, durch die sich eine mit dem Getriebe mechanisch gekoppelte Abtriebswelle in ihrer Längsrichtung erstreckt und in der ferner gegebenenfalls zwischen dem Gehäuse und der Abtriebswelle eine Wellendichtung vorgesehen ist, wobei die Durchführung durch die Abtriebswelle und gegebenenfalls durch eine zwischen dem Gehäuse und der Abtriebswelle vorgesehene Wellendichtung verschlossen ist.
- Eine Durchgangsbohrung durch das Gehäuse, in die eine Funktionskomponente eingebracht, beispielsweise eingeschraubt, ist. Bei der Funktionskomponente handelt es sich um eine Komponente, deren Funktion darüber hinausgeht, dass sie lediglich in die Durchgangsbohrung eingebracht, zum Beispiel eingeschraubt, ist, diese also verschließt. Es kann sich beispielsweise um eine elektrische Funktionskomponente oder eine magnetische Funktionskomponente oder eine pneumatische Funktionskomponente handeln, insbesondere um eine elektrische Leitung oder um einen Sensor oder um einen Aktor oder um einen Magneten oder um ein Druckausgleichselement, z.B. um einen Breather, der zwar eine gewisse Durchlässigkeit für Gas aufweist, das Gehäuse aber doch in dem Sinne verschließt, dass kein Ölaustritt auftreten kann, oder um dergleichen handeln.

Bei dem in das Gehäuse der fertig hergestellten Antriebsvorrichtung befindlichen Öl, kann es sich um durch eine dieser Gestaltungen in das Gehäuse gelangtes Öl handeln. Es kann sich auch um durch vergleichbare Gestaltungen in das Gehäuse gelangtes Öl handeln.

Beispielsweise kann das Öl durch die oben erläuterte Öffnung hindurch eingebrachtes Öl sein oder durch die oben erläuterte durch das Verbindungsmittel verschlossene Durchgangsbohrung hindurch eingebrachtes Öl sein oder durch die oben erläuterte Durchführung hindurch eingebrachtes Öl sein oder durch die oben erläuterte Durchgangsbohrung, in die ein Funktionselement die Durchgangsbohrung verschließend eingebracht ist, hindurch eingebrachtes Öl sein.

Die Erfindung betrifft auch Verfahren zur Herstellung von einer Antriebsvorrichtung für ein Fahrzeug mit einem Gehäuse, in dem ein ölgeschmiertes Getriebe aufgenommen ist, wobei sich im Inneren des Gehäuses ein Öl zumindest zur Schmierung des Getriebes befindet. Diesen Verfahren ist gemeinsam, dass das Öl bereits während der Herstellung der Antriebsvorrichtung in das Innere des Gehäuses eingefüllt wird.

"Während der Herstellung" bedeutet dabei mit anderen Worten, dass dem Verfahrensschritt des Einfüllens des Öls in das Gehäuse oder in etwas, was nach Herstellung der Antriebsvorrichtung das Gehäuse oder ein Teil des Gehäuses ist, ein Verfahrensschritt, der zum Verfahren zur Herstellung der Antriebsvorrichtung gehört, beispielsweise ein Montageschritt, der zum Verfahren zur Herstellung der Antriebsvorrichtung gehört, zeitlich nachfolgt. Insbesondere handelt es sich dabei um einen Verfahrensschritt, bei dem genau die strukturelle Gestaltung, durch die hindurch das Einfüllen des Öls in das Gehäuse erfolgt, verschlossen wird.

Zu den Gestaltungen, die dafür in Frage kommen können, wird auf die Ausführungen oben verwiesen. In jedem Fall handelt es sich bei diesem Verschließen nicht um das bloße Verschließen einer Öffnung durch ein Verschlusselement, das keine weitere Funktion außer dem Verschließen der Öffnung hat.

Da, wie oben bereits erläutert, erkannt wurde, dass elektrische Antriebsvorrichtungen zum Antrieb von Fahrzeugen, beispielsweise von Personen- oder Lastkraftwagen, und Öle zur Schmierung dieser Antriebsvorrichtungen derart auslegbar sind, dass während der Lebensdauer dieser Antriebsvorrichtungen ein Wechsel des Öls gar nicht oder nur in sehr langen zeitlichen Abständen erforderlich ist, resultiert der technische Vorteil, dass das Gehäuse der Antriebsvorrichtung ohne eine Öleinlassöffnung und ohne eine Ölauslassöffnung gestaltet werden kann, also vereinfacht werden kann.

Mit Hinblick auf die Ausgestaltung und Merkmale der Antriebsvorrichtung und des Öls kann auf die Ausführungen weiter oben verwiesen werden.

In Ausführungsformen des erfindungsgemäßen Herstellverfahrens ist es vorgesehen, dass die hergestellte Antriebsvorrichtung tatsächlich weder eine Öleinlassöffnung noch eine Ölauslassöffnung im Sinne der Erfindung (siehe oben) aufweist.

In Ausführungsformen des erfindungsgemäßen Herstellverfahrens ist es vorgesehen, dass das Gehäuse zumindest ein erstes und ein zweites Gehäuseteil, beispielsweise einen Gehäusedeckel, aufweist, und zwischen dem ersten und dem zweiten Gehäuseteil eine lösbare oder unlösbare Verbindung besteht, sodass das Gehäuse nach außen abgeschlossen ist, und dass das Gehäuse gerade durch die Herstellung der Verbindung nach außen abgeschlossen wird, indem die Verbindung eine zuvor bestehende Öffnung zumindest eines der beiden Gehäuseteile oder zwischen den beiden Gehäuseteilen verschließt. Bei diesen Ausführungsformen kann weiter vorgesehen sein, dass das Öl vor dem Verschließen der Öffnung durch die Öffnung hindurch in das Innere des Gehäuses eingebrachtes Öl ist.

Das Verfahren umfasst hierbei also insbesondere folgende Verfahrensschritte:
- Zusammenbringen oder Bereitstellen des ersten Gehäuseteils und des zweiten Gehäuseteils derart, dass zunächst eine Öffnung verbleibt, die das Innere des Gehäuses mit der Umgebung des Gehäuses verbindet, dann
- Einfüllen des Öls durch die Öffnung in das Innere des Gehäuses, dann
- Verbinden des ersten Gehäuseteils mit dem zweiten Gehäuseteil, wodurch sich die Öffnung des Gehäuses verschließt.

Dabei kann es insbesondere vorgesehen sein, dass das erste Gehäuseteil mit dem zweiten Gehäuseteil durch ein Verbindungsmittel, beispielsweise eine Schraube, verbunden wird, indem es eine Durchgangsbohrung, die sich durch das erste Gehäuseteil und durch das zweite Gehäuseteil erstreckt und die das Innere des Gehäuses mit der Umgebung des Gehäuses verbindet, verschließt, und dass das Öl vor dem Verschließen durch die Durchgangsbohrung hindurch in das Innere des Gehäuses eingefüllt wird.

In Ausführungsformen des erfindungsgemäßen Herstellverfahrens ist es vorgesehen, dass die Antriebsvorrichtung zumindest eine mit dem Getriebe mechanisch gekoppelte Abtriebswelle aufweist, wobei das Gehäuse eine Durchführöffnung aufweist, durch die sich die Abtriebswelle in ihrer Längsrichtung erstreckt und die durch die Abtriebswelle und gegebenenfalls durch eine zwischen dem Gehäuse und der Abtriebswelle vorgesehene Wellendichtung verschlossen ist. Dabei kann es weiter vorgesehen sein, dass das Öl vor dem Verschließen der Durchführung durch die Abtriebswelle und gegebenenfalls durch die Wellendichtung in das Innere des Gehäuses eingebrachtes Öl ist.

Das Herstellverfahren umfasst dann insbesondere folgende Verfahrensschritte:
- Bereitstellen eines Gehäuses, das eine Durchführöffnung aufweist, dann
- Einfüllen des Öls durch die Durchführöffnung in das Innere des Gehäuses, dann
- Einbringen der Abtriebswelle und gegebenenfalls einer Wellendichtung in die Durchführöffnung, sodass die Durchführöffnung verschlossen wird.

In Ausführungsformen des erfindungsgemäßen Herstellverfahrens ist es vorgesehen, dass die Antriebsvorrichtung zumindest eine in eine Durchgangsbohrung durch das Gehäuse die Durchgangsbohrung verschließend eingebrachte, beispielsweise eingeschraubte, Funktionskomponente aufweist, beispielsweise eine elektrische Funktionskomponente oder eine magnetische Funktionskomponente oder eine pneumatische Funktionskomponente, insbesondere eine elektrische Leitung oder einen Sensor oder einen Aktor oder einen Magneten oder ein Druckausgleichselement.

Dabei kann es weiter vorgesehen sein, dass das Öl vor dem Einbringen der Funktionskomponente in die Durchgangsbohrung durch die Durchgangsbohrung in das Innere des Gehäuses eingebrachtes Öl ist.

Das Herstellverfahren umfasst dann insbesondere folgende Verfahrensschritte:
- Bereitstellen eines Gehäuses, das eine Durchgangsöffnung aufweist, dann
- Einfüllen des Öls durch die Durchgangsöffnung in das Innere des Gehäuses, dann
- Einbringen, insbesondere Einschrauben, der Funktionskomponente in die Durchgangsöffnung, sodass die Durchgangsöffnung verschlossen wird.

Die Erfindung umfasst auch Verfahren zur Demontage einer Antriebsvorrichtung. Derartige Demontagen können beispielsweise im Rahmen von einer Reparatur, einem Recycling oder ähnlichem erfolgen. Dabei erfolgt die Demontage einer der oben beschriebenen Antriebsvorrichtungen und/oder die Demontage erfolgt als exakte zeitliche Umkehr der oben beschriebenen Herstellverfahren.

"Zeitliche Umkehr" meint dabei zunächst, dass sich die Reihenfolge der Verfahrensschritte umkehrt. Aus einem zeitlichen "Danach" eines zweiten Verfahrensschritt relativ zu einem ersten Verfahrensschritt wird also ein zeitliches

"Zuvor" des zweiten Verfahrensschritt relativ zu dem ersten Verfahrensschritt. Zusätzlich gehen aber auch die einzelnen Verfahrensschritte, jeder für sich, in ihr zeitlich gespiegeltes Gegenstück über. Beispielsweise geht die Herstellung einer Verbindung in ein Lösen einer Verbindung über; geht das Zusammenbringen von Teilen in ein Auseinandernehmen von Teilen über; geht das Einfüllen von Öl in ein Ausleeren von Öl über; geht das Bereitstellen in ein Entfernen über; geht ein Einbringen in ein Herausnehmen über usw..

Die erfindungsgemäßen Verfahren zur Demontage einer Antriebsvorrichtung haben - ähnlich wie die erfindungsgemäßen Verfahren zur Herstellung der Antriebsvorrichtung - die technische Wirkung, dass das Gehäuse der Antriebsvorrichtung ohne eine Öleinlassöffnung und ohne eine Ölauslassöffnung gestaltet werden kann, also vereinfacht werden kann.

Auch ein Gesamtverfahren, dass die erfindungsgemäße Herstellung einer insbesondere erfindungsgemäßen Antriebsvorrichtung und zeitlich nachfolgend eine erfindungsgemäße Demontage einer insbesondere erfindungsgemäßen Antriebsvorrichtung umfasst, ist selbstverständlich von der Erfindung umfasst. In dem Zeitraum zwischen der Herstellung und der Demontage der Antriebsvorrichtung kann die Antriebsvorrichtung zum Antrieb eines Fahrzeugs zur Verfügung stehen, bzw. zumindest phasenweise ein Fahrzeug antreiben, wobei in diesem Zeitraum weder Öl in das Gehäuse eingefüllt noch Öl aus dem Gehäuse ausgeleert wird.

Nachfolgend werden beispielhafte Ausführungsformen der Erfindung unter Bezugnahme auf die Zeichnung erläutert. In der Zeichnung zeigt:
- Figur 1: eine stark schematisierte Darstellung einer Antriebsvorrichtung für ein Fahrzeug gemäß der vorliegenden Erfindung;
- Figur 2: eine Detaillierung eines Teilbereichs der Antriebsvorrichtung aus Figur 1.

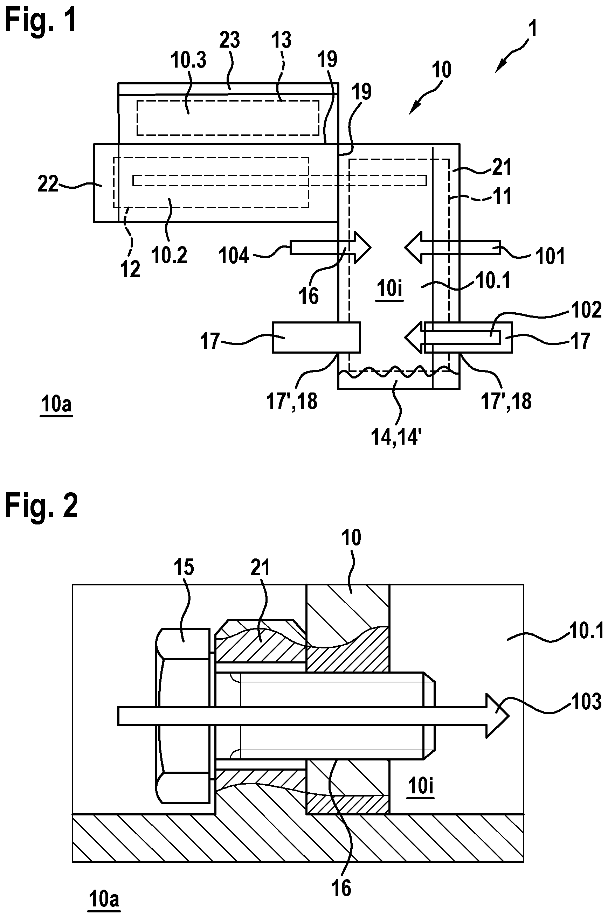

Figur 1 zeigt eine stark schematisierte Darstellung einer Antriebsvorrichtung 1 für ein Fahrzeug gemäß der vorliegenden Erfindung. Die Antriebsvorrichtung 1 umfasst dabei ein Gehäuse 10, in dem ein ölgeschmiertes Getriebe 11 aufgenommen ist, in dem eine elektrische Maschine 12 aufgenommen ist, die mit dem Getriebe 11 mechanisch gekoppelt ist, und in dem ein mit der elektrischen Maschine 12 elektrisch verbundener Wechselrichter 13 aufgenommen ist. Im Inneren 10i des Gehäuses 10 befindet sich auch ein Öl 14, das zumindest zur Schmierung des Getriebes 11 dient. Wie in der Figur 1 ersichtlich, ist eine Menge Öl 14 vorgesehen, sodass sich das Öl 14, einer Schwerkraft folgend, als Reservoir in einem Ölsumpf 14' sammeln kann. Durch Eintauchen von rotierenden Getriebeteilen in den Ölsumpf 14' verteilt sich das Öl 14 zumindest auf den Oberflächen sämtlicher rotierender Getriebeteile. Das Gehäuse 10 kann einen ersten Teilbereich 10.1 aufweisen, in dem das Getriebe 11 angeordnet ist und einen zweiten Teilbereich 10.2 aufweisen, in dem die elektrischen Maschine 12 angeordnet ist und der von dem ersten Teilbereich 10.1 durch eine dichte Trennwand 19 des Gehäuses 10 getrennt ist. In diesem Fall kann vorgesehen sein, dass sich das Öl 14 lediglich in dem ersten Teilbereich 10.1 befindet. Man spricht dann von einer trocken laufenden E-Maschine 12.

Ohne eine derartige Trennwand 19 (nicht gezeichnete Alternative) kann das Öl 14 auch in Kontakt mit bewegten bzw. zu kühlenden Teilen der elektrischen Maschine 12 stehen. In diesem Fall spricht man auch von einer nass laufenden E-Maschine 12.

Im Beispiel umfasst das Gehäuse 10 zusätzlich noch einen dritten Teilbereich 10.3, der wiederum durch eine Trennwand 19 von den anderen Teilbereichen 10.1, 10.2 getrennt ist. In diesem Teilbereich 10.3 befindet sich ein Wechselrichter 13, der mit der elektrischen Maschine 12 über beispielsweise drei (nicht gezeichnete) elektrische Leiter verbunden ist.

Im Beispiel ist der erste Teilbereich 10.1 des Gehäuses 10 durch einen ersten Gehäusedeckel 21 verschlossen, der zweite Teilbereich 10.2 des Gehäuses 10 durch einen zweiten Gehäusedeckel 22 verschlossen und der dritte Teilbereich 10.3 des Gehäuses 10 durch einen dritten Gehäusedeckel 23 verschlossen.

Zwei jeweils mit einem Ausgang eines Differentials des Getriebes 11 gekoppelte Abtriebswellen 17 sind durch eine Durchführung 18 des Gehäuses 10 im ersten Teilbereich 10.1 bzw. durch den ersten Gehäusedeckel 21 hindurchgeführt und mit Wellendichtungen 17' abgedichtet.

Figur 2 zeigt eine vergrößerte Ansicht einer Verschraubung des Gehäuses 10 mit dem ersten Deckel 21. Ersichtlich liegt der erste Deckel 21 außen am ersten Teilbereich 10.1 des Gehäuses 10 derart an, dass eine Durchgangsbohrung 16 des ersten Deckels 21 mit einer durchgängigen Gewindebohrung des Gehäuses 10 koaxial und in Längsrichtung voreinander zu liegen kommt. Durch die Durchgangsbohrung 16 des ersten Deckels 21 ist eine als Sechskantschraube ausgeführte Schraube 15 geführt und mit ihrem Außengewinde in die Gewindebohrung des Gehäuses 10 eingeschraubt.

In das Gehäuse 10 können in diesem Beispiel im ersten Teilbereich 10.1 verschiedenartige Funktionselemente in durchgängige Gewindebohrungen 16 des Gehäuses 10 eingeschraubt sein (nicht gezeichnet). Die Funktionskomponenten können beispielsweise eine elektrische Funktionskomponente oder eine magnetische Funktionskomponente oder eine pneumatische Funktionskomponente umfassen, insbesondere eine elektrische Leitung oder einen Sensor oder einen Aktor oder einen Magneten oder ein Druckausgleichselement, z.B. einen Breather, der zwar eine gewisse Durchlässigkeit für Gas aufweist, das Gehäuse 10 aber doch in dem Sinne verschließt, dass kein Ölaustritt auftreten kann. Alternativ kann es sich auch um dergleichen handeln.

Obwohl das Gehäuse 10 der Antriebseinrichtung 1 dicht verschlossen ist und in diesem Beispiel weder eine Öleinlassöffnung noch eine Ölauslassöffnung im Sinne der Erfindung aufweist, befindet sich doch Öl 14 im Inneren 10i des Gehäuses 10, hier im ersten Teilbereich 10.1. Dies wird durch das erfindungsgemäße Verfahren zur Herstellung erreicht, das vorsieht, dass das Öl 14 bereits während der Herstellung der Antriebsvorrichtung 1 in das Innere 10i des Gehäuses 10 eingefüllt wird.

In einer ersten Ausführungsform des erfindungsgemäßen Verfahrens kann das Öl 14 in das Innere 10i des Gehäuses 10 eingefüllt werden, bevor der erste Deckel 21 mit dem Gehäuse 10 verbunden wird, siehe Pfeil 101 in der Figur 1. Um ein Auslaufen des Öls 14 hierbei sicher zu vermeiden, kann es zweckmäßig sein, das Gehäuse 10 so zu verkippen, dass die Öffnung des ersten Teilbereichs 10.1 des Gehäuses 10 entgegen der Schwerkraft nach oben weist.

In einer zweiten Ausführungsform des erfindungsgemäßen Verfahrens kann das Öl 14 in das Innere 10i des Gehäuses 10 eingefüllt werden, bevor eine der beiden Abtriebswellen 17 ggf. zusammen mit der Wellendichtung 17' in die Durchführungen 18 des Gehäuses 10 eingebracht sind, siehe Pfeil 102. Wiederum kann es zweckmäßig sein, das Gehäuse 10 so zu verkippen, dass die betreffende Durchführung 18 des Gehäuses 10 entgegen der Schwerkraft nach oben weist.

In einer dritten Ausführungsform des erfindungsgemäßen Verfahrens kann das Öl 14 in das Innere 10i des Gehäuses 10 eingefüllt werden, bevor die in der Figur 2 gezeigte Schraube 15 in der durchgängigen Gewindebohrung 16 des Gehäuses 10 fixiert wird, siehe Pfeil 103 in der Figur 2.

Alternativ kann das Einfüllen des Öls 14 auch durch eine der oben erwähnten durchgängigen Gewindebohrungen 16 des Gehäuses 10, die zum Einschrauben eines Funktionselements vorgesehen sind, erfolgen, siehe Pfeil 104 in der Figur 1.

## Patentansprüche

1. Antriebsvorrichtung (1) für ein Fahrzeug mit einem Gehäuse (10), in dem ein ölgeschmiertes Getriebe (11) aufgenommen ist, beispielsweise elektrische Antriebsvorrichtung mit einem Gehäuse (10), in dem eine elektrische Maschine (12), ein mit der elektrischen Maschine (12) mechanisch gekoppeltes ölgeschmiertes Getriebe (11) und ggf. ein mit der elektrischen Maschine (12) elektrisch verbundener Wechselrichter (13) aufgenommen ist, wobei sich im Inneren (10i) des Gehäuses (10) ein Öl (14) zumindest zur Schmierung des Getriebes (11) befindet, **dadurch gekennzeichnet, dass** das Gehäuse (10) weder eine Öleinlassöffnung noch eine Ölauslassöffnung aufweist.

2. Antriebsvorrichtung (1) nach Anspruch 1, **dadurch gekennzeichnet, dass** das Gehäuse (10) zumindest ein erstes und ein zweites Gehäuseteil, beispielsweise einen Gehäusedeckel (21), aufweist, und zwischen dem ersten und dem zweiten Gehäuseteil eine lösbare oder unlösbare Verbindung besteht, sodass das Gehäuse (10) nach außen abgeschlossen ist, und dass das Gehäuse (10) gerade durch die Herstellung der Verbindung nach außen abgeschlossen wird, indem die Verbindung eine zuvor bestehende Öffnung zumindest eines der beiden Gehäuseteile oder eine Öffnung zwischen den beiden Gehäuseteilen verschließt.

3. Antriebsvorrichtung (1) nach Anspruch 2, **dadurch gekennzeichnet, dass** das Öl (14) vor dem Verschließen der Öffnung durch die Öffnung hindurch in das Innere (10i) des Gehäuses (10) eingebrachtes Öl (104) ist.

4. Antriebsvorrichtung (1) nach Anspruch 2, **dadurch gekennzeichnet, dass** das erste Gehäuseteil mit dem zweiten Gehäuseteil durch ein Verbindungsmittel, beispielsweise eine Schraube (15), verbunden ist, welche das erste Gehäuseteil mit dem zweiten Gehäuseteil verbindet, indem es eine Durchgangsbohrung (16), die sich durch das erste Gehäuseteil und durch das zweite Gehäuseteil erstreckt und die das Innere (10i) des Gehäuses (10) mit der Umgebung (10a) des Gehäuses (10) verbindet, verschließt.

5. Antriebsvorrichtung (1) nach Anspruch 4, **dadurch gekennzeichnet, dass** das Öl (14) vor dem Verschließen der Durchgangsbohrung (16) durch das Verbindungsmittel durch die Durchgangsbohrung (16) in das Innere (10i) des Gehäuses (10) eingebrachtes Öl (14) ist.

6. Antriebsvorrichtung (1) nach Anspruch 1, **dadurch gekennzeichnet, dass** die Antriebsvorrichtung (1) zumindest eine mit dem Getriebe (11) mechanisch gekoppelte Abtriebswelle (17) aufweist, wobei das Gehäuse (10) eine Durchführöffnung (18) aufweist, durch die sich die Abtriebswelle (17) in ihrer Längsrichtung erstreckt und die durch die Abtriebswelle (17) und gegebenenfalls durch eine zwischen dem Gehäuse (10) und der Abtriebswelle (17) vorgesehene Wellendichtung (17') verschlossen ist.

7. Antriebsvorrichtung (1) nach Anspruch 6, **dadurch gekennzeichnet, dass** das Öl (14) vor dem Verschließen der Durchführung (18) durch die Abtriebswelle (17) und gegebenenfalls durch die Wellendichtung (17') in das Innere (10i) des Gehäuses (10) eingebrachtes Öl (14) ist.

8. Antriebsvorrichtung (1) nach Anspruch 1, **dadurch gekennzeichnet, dass** die Antriebsvorrichtung (1) zumindest eine in eine Durchgangsbohrung (16) durch das Gehäuse (10) die Durchgangsbohrung (16) verschließend eingebrachte, beispielsweise eingeschraubte, Funktionskomponente aufweist, beispielsweise eine elektrische Funktionskomponente oder eine magnetische Funktionskomponente oder eine pneumatische Funktionskomponente, insbesondere eine elektrische Leitung oder einen Sensor oder einen Aktor oder einen Magneten oder ein Druckausgleichselement.

9. Antriebsvorrichtung (1) nach Anspruch 8, **dadurch gekennzeichnet, dass** das Öl (14) vor dem Einbringen der Funktionskomponente in die Durchgangsbohrung (16) durch die Durchgangsbohrung (16) in das Innere (10i) des Gehäuses (10) eingebrachtes Öl (14) ist.

10. Verfahren zur Herstellung einer Antriebsvorrichtung (1) für ein Fahrzeug mit einem Gehäuse (10), in dem ein ölgeschmiertes Getriebe (11) aufgenommen ist, beispielsweise elektrische Antriebsvorrichtung (1) mit einem Gehäuse (10), in dem eine elektrische Maschine (12), ein mit der elektrischen Maschine (12) mechanisch gekoppeltes ölgeschmiertes Getriebe (11) und ggf. ein mit der elektrischen Maschine (12) elektrisch verbundener Wechselrichter (13) aufgenommen ist, wobei sich im Inneren (10i) des Gehäuses (10) ein Öl (14) zumindest zur Schmierung des Getriebes (11) befindet, wobei das Öl (14) während der Herstellung der Antriebsvorrichtung (1) in das Innere (10i) des Gehäuses (10) eingefüllt wird.

11. Verfahren nach Anspruch 10 zur Herstellung einer Antriebsvorrichtung (1) nach einem der Ansprüche 1 bis 9.

12. Verfahren nach Anspruch 11 zur Herstellung einer Antriebsvorrichtung (1) nach Anspruch 3 mit folgenden Verfahrensschritten:
- Zusammenbringen oder Bereitstellen des ersten Gehäuseteils und des zweiten Gehäuseteils derart, dass zunächst eine Öffnung verbleibt, die das Innere (10i) des Gehäuses (10) mit der Umgebung (10a) des Gehäuses (10) verbindet, dann
- Einfüllen des Öls (14) durch die Öffnung in das Innere (10i) des Gehäuses (10), dann
- Verbinden des ersten Gehäuseteils mit dem zweiten Gehäuseteil, wodurch sich die Öffnung des Gehäuses (10) verschließt.

13. Verfahren zur Herstellung einer Antriebsvorrichtung (1) nach Anspruch 12, wobei das erste Gehäuseteil mit dem zweiten Gehäuseteil durch ein Verbindungsmittel, beispielsweise eine Schraube (15), verbunden wird, indem es eine Durchgangsbohrung (16), die sich durch das erste Gehäuseteil und durch das zweite Gehäuseteil erstreckt und die das Innere (10i) des Gehäuses (10) mit der Umgebung (10a) des Gehäuses (10) verbindet, verschließt, und wobei das Öl (14) durch die Durchgangsbohrung (16) hindurch in das Innere (10i) des Gehäuses (10) eingefüllt wird.

14. Verfahren nach Anspruch 11 zur Herstellung einer Antriebsvorrichtung (1) nach Anspruch 7 mit folgenden Verfahrensschritten:
- Bereitstellen eines Gehäuses (10), das eine Durchführöffnung (18) aufweist, dann
- Einfüllen des Öls (14) durch die Durchführöffnung (18) in das Innere (10i) des Gehäuses (10), dann
- Einbringen der Abtriebswelle (17) und gegebenenfalls einer Wellendichtung (17') in die Durchführöffnung (18), sodass die Durchführöffnung (18) verschlossen wird.

15. Verfahren nach Anspruch 11 zur Herstellung einer Antriebsvorrichtung (1) nach Anspruch 9 mit folgenden Verfahrensschritten:
- Bereitstellen eines Gehäuses (10), das eine Durchgangsöffnung (16) aufweist, dann
- Einfüllen des Öls (14) durch die Durchgangsöffnung (16) in das Innere (10i) des Gehäuses, dann
- Einbringen, insbesondere Einschrauben der Funktionskomponente in die Durchgangsöffnung (16), sodass die Durchgangsöffnung (16) verschlossen wird.

16. Verfahren zur Demontage einer Antriebsvorrichtung für ein Fahrzeug mit einem Gehäuse (10), in dem ein ölgeschmiertes Getriebe (11) aufgenommen ist, beispielsweise elektrische Antriebsvorrichtung mit einem Gehäuse (10), in dem eine elektrische Maschine (12), ein mit der elektrischen Maschine (12) mechanisch gekoppeltes ölgeschmiertes Getriebe (11) und ggf. ein mit der elektrischen Maschine (12) elektrisch verbundener Wechselrichter (13) aufgenommen ist, wobei sich im Inneren (10i) des Gehäuses (10) ein Öl (14) zumindest zur Schmierung des Getriebes (11) befindet, insbesondere einer Antriebsvorrichtung (1) nach einem der Ansprüche 1 bis 9, **dadurch gekennzeichnet, dass** die Demontage eine zeitliche Umkehr eines Verfahrens zur Herstellung einer Antriebsvorrichtung (1) nach einem der Ansprüche 10 bis 15 darstellt.
